# EUROPÄISCHE PATENTSCHRIFT

(11) **EP 1 441 936 B1**
(45) Veröffentlichungstag und Bekanntmachung des Hinweises auf die Patenterteilung: **21.12.2005**
(21) Anmeldenummer: 02774377.2
(22) Anmeldetag: 17.09.2002
(51) Int. Cl.: B60T 7/22, B60K 31/04, B60K 31/00

(54) **VORRICHTUNG ZUR LÄNGSFÜHRUNG EINES KRAFTFAHRZEUGS**
DEVICE FOR LONGITUDINALLY GUIDING A MOTOR VEHICLE
DISPOSITIF DE GUIDAGE LONGITUDINAL D'UN VEHICULE

(30) Priorität: 30.10.2001 DE 10153527
(43) Veröffentlichungstag der Anmeldung: 04.08.2004
(73) Patentinhaber: ROBERT BOSCH GMBH, 70442 Stuttgart (DE)
(72) Erfinder: MICHI, Harald, 75248 Oelbronn-Duerrn (DE); SCHERL, Michael, 74321 Bietigheim (DE); UHLER, Werner, 76646 Bruchsal (DE)
(86) Internationale Anmeldenummer: PCT/DE2002/003482
(87) Internationale Veröffentlichungsnummer: WO 2003/039925

(56) Entgegenhaltungen:
- DE-A- 19 958 520

## Beschreibung

Die Erfindung betrifft Vorrichtung zur Längsführung eines Kraftfahrzeugs, mit einem Geschwindigkeitssensor zur Messung der Fahrgeschwindigkeit des Fahrzeugs, einem Abstandssensor und zur Messung des Abstands zu einem etwa vor dem Fahrzeug befindlichen Hindernis und einem Regler, der in das Antriebs- und Bremssystem des Fahrzeugs eingreift und die Fahrgeschwindigkeit - gegebenenfalls in Abhängigkeit vom Abstand zum Hindernis - in einem geschlossenen Regelkreis regelt, sofern die Fahrgeschwindigkeit oberhalb einer bestimmten Grenzgeschwindigkeit liegt. Unter "Längsführung" sollen hier die Steuerungs- und Regelvorgänge verstanden werden, die sich auf die Bewegung des Fahrzeugs in Fahrzeuglängsrichtung beziehen, also insbesondere die Steuerung oder Regelung der Fahrgeschwindigkeit.

### Stand der Technik

Es sind Geschwindigkeitsregler bekannt, die es ermöglichen, die Geschwindigkeit des Fahrzeugs auf eine vom Fahrer gewählte Wunschgeschwindigkeit zu regeln. Ein Beispiel eines solchen Regelsystems, das auch als ACC-System (Adaptive Cruise Control) bekannt ist, wird beschrieben in "Adaptive Cruise Control System - Aspects and Development Trends" von Winner, Witte, Uhler und Lichtenberg, Robert Bosch GmbH, in SAE Technical Paper Series 961010, International Congress & Exposition, Detroit, 26.-29. Februar 1996. Da diese Systeme auch einen Abstandssensor aufweisen, beispielsweise in der Form eines Radarsensors, eines Stereo-Kamerasystems oder dergleichen, kann die Fahrzeuggeschwindigkeit auch so geregelt werden, daß automatisch ein geeigneter Sicherheitsabstand zu einem vorausfahrenden Fahrzeug eingehalten wird.

Aus der DE 199 58 520 A1 ist ein Geschwindigkeitsregler für ein Kraftfahrzeug bekannt, der ab einer bestimmten Mindestgeschwindigkeit die Fahrgeschwindigkeit des Fahrzeugs regelt und bei Geschwindigkeiten unterhalb einer vorgegebenen Grenzgeschwindigkeit bis hin zum Stillstand des Fahrzeugs ebenfalls die Fahrzeuggeschwindigkeit regelt. Weiterhin ist vorgesehen, dass Signale an die Bremsvorrichtungen des Fahrzeugs ausgegeben werden, um die Bremseinrichtungen zu betätigten.

Da jedoch mit den verfügbaren Sensoreinrichtungen eine vollständige Erfassung und sichere Bewertung des Verkehrsumfeldes noch nicht möglich ist, eignen sich diese Systeme bisher vor allem für relativ stabile Verkehrssituationen wie z.B. das Fahren auf einer Autobahn oder Schnellstraße. Im innerstädtischen Verkehr oder bei Fahrten mit niedriger Geschwindigkeit auf kurvenreichen Strecken könnten dagegen die Unsicherheiten bei der Erfassung des jeweils relevanten Zielobjektes zu einem Unfallrisiko führen. Aus diesem Grund sind bekannte ACC-Systeme bisher so ausgelegt, daß sie sich nur oberhalb einer bestimmten Grenzgeschwindigkeit aktivieren lassen, beispielsweise oberhalb von 40 km/h.

Es ist bereits vorschlagen worden, den Anwendungsbereich des ACC-Systems auf eine Verkehrssituation zu erweitern, die als Stop & Go Verkehr bezeichnet wird und die beispielsweise bei einem Verkehrsstau oder bei zähflüssigem Verkehr auftritt. Auch diese Verkehrssituation ist relativ stabil und eignet sich daher für eine automatische Abstandsregelung. Allerdings muß die Funktionalität dann so erweitert werden, daß auch Anfahr- und Anhaltevorgänge automatisiert werden können.

Der Geschwindigkeitssensor wird bisher durch ein System von dynamischen Raddrehzahlsensoren gebildet, die bei Fahrzeugen mit Antiblockiersystem oder automatischer Traktionskontrolle ohnehin vorhanden sind. Da diese Raddrehzahlsensoren die Winkelinkremente der Räder des Fahrzeugs jedoch nur mit einer begrenzten Auflösung erfassen können, wird das Geschwindigkeitssignal bei niedrigen Geschwindigkeiten instabil und unzuverlässig. Auch dies ist ein Grund dafür, daß bisher die Regelung bei niedrigen Geschwindigkeiten ausgesetzt wird.

### Aufgabe, Lösung und Vorteile der Erfindung

Aufgabe der Erfindung ist es, eine Vorrichtung zur Längsführung eines Kraftfahrzeugs zu schaffen, die eine Ausdehnung des automatischen Betriebs zu kleineren Geschwindigkeiten ermöglicht, ohne daß ein aufwendigerer Geschwindigkeitssensor benötigt wird.

Diese Aufgabe wird erfindungsgemäß gelöst durch eine Steuereinrichtung, die bei Fahrgeschwindigkeiten unterhalb der Grenzgeschwindigkeit steuernd in das Antriebs- und Bremssystem eingreift.

Vorteilhafte Ausgestaltungen der Erfindung ergeben sich aus den Unteransprüchen.

Durch den Übergang von Regelung auf Steuerung wird bei Fahrgeschwindigkeiten unterhalb der Grenzgeschwindigkeit eine vom Signal des Geschwindigkeitssensors unabhängige Längsführung ermöglicht, so daß sich fehlerhafte oder ausbleibende Signale des Geschwindigkeitssensors nicht störend auf das Verhalten auswirken. Auf diese Weise läßt sich insbesondere eine Stopfunktion realisieren, bei der das Fahrzeug beispielsweise beim Auffahren auf ein stehendes Hindernis, etwa auf ein Stauende, automatisch gesteuert in den Stand gebremst wird. Ebenso läßt sich eine Stop & Go-Funktion realisieren, bei der das Fahrzeug nicht nur automatisch in den Stand gebremst wird sondern auch, sobald die Verkehrssituation dies zuläßt, das erneute Anfahren und Beschleunigen des Fahrzeugs automatisch gesteuert wird.

Der Begriff "Steuern" bedeutet in diesem Zusammenhang, daß das Signal des Geschwindigkeitssensors nicht als Rückkopplungssignal verwendet wird. Dies schließt nicht aus, daß das Steuerungsverhalten in Abhängigkeit von den Signalen des Abstandssensors modifiziert wird, die ihrerseits indirekt durch die Eigenbewegung des Fahrzeugs beeinflußt werden.

So läßt sich zum Beispiel auch eine typische Stop & Go-Situation beherrschen, in der das Hindernis, also das unmittelbar vor dem eigenen Fahrzeug stehende Fahrzeug, anfährt und nach kurzer Zeit wieder anhält. Wenn sich der Abstand zum vorausfahrenden Fahrzeug vergrößert, wird das gesteuerte Anfahren des eigenen Fahrzeugs ausgelöst. Während dieses Anfahrvorgangs kann auch dann, wenn die Grenzgeschwindigkeit für das Einsetzen der Regelung noch nicht erreicht ist, in Abhängigkeit von dem gemessenen Abstand in die Steuerung eingegriffen werden, so daß ein zu dichtes Auffahren auf das vorausfahrende Fahrzeug vermieden wird. Erforderlichenfalls kann auch wieder auf ein gesteuertes Abbremsen in den Stand umgeschaltet werden. Wenn sich aus den vom Radarsystem des Abstandssensors gemessenen Abstands- und Relativgeschwindigkeitsdaten ergibt, daß das vorausfahrende Fahrzeug nur mit sehr geringer Geschwindigkeit fährt, kann, insbesondere bei Fahrzeugen mit Automatikgetriebe, der gesteuerte Betrieb auch darin bestehen, daß die Steuereinrichtung die Bremse löst und das Fahrzeug mit geringer Geschwindigkeit rollen läßt, entweder mit mäßigem Gas oder ohne Gas und unter Ausnutzung der Drehzahlregelfunktion des elektronischen Motormanagements. Wenn sich das vorausfahrende Fahrzeug rasch entfernt, weil sich der Stau aufgelöst hat, bewirkt die Steuereinrichtung dagegen eine weitere Beschleunigung, bis die Grenzgeschwindigkeit erreicht ist und die Längsführung wieder vom Regler übernommen wird.

Wenn auch die Signale des Geschwindigkeitssensors, insbesondere hinsichtlich ihrer zeitlichen Auflösung, für eine zufriedenstellende Geschwindigkeitsregelung nicht brauchbar sind, können sie gleichwohl, ggf. nach geeigneter zeitlicher Mittelung, für andere Zwecke im Rahmen der Längsführung ausgewertet werden, beispielsweise zur Bestimmung der Absolutgeschwindigkeit des vorausfahrenden Fahrzeugs durch Vergleich der Relativgeschwindigkeit und der eigenen Fahrgeschwindigkeit oder zur Berechnung des derzeit von dem eigenen Fahrzeug durchfahrenen Kurvenradius anhand der Fahrgeschwindigkeit und der parallel von einem Giergeschwindigkeitssensor gemessenen Giergeschwindigkeit des Fahrzeugs. Die Kenntnis des Kurvenradius kann beispielsweise von Belang sein, wenn im Zusammenhang mit der Auswahl des Zielobjektes für die Abstandsregelung oder -überwachung ein Spurwechsel des eigenen Fahrzeugs erkannt werden soll, oder um einen Abbiegevorgang zu erkennen, bei dem die Stop & Go-Funktion aus Sicherheitsgründen nicht benutzt werden sollte.

Der Wechsel zwischen Steuern und Regeln kann sprunghaft, durch Umschaltung bei Erreichen der Grenzgeschwindigkeit erfolgen, vorzugsweise mit einer gewissen Hysterese. In einer anderen Ausführungsform kann jedoch auch ein fließender Übergang stattfinden, beispielsweise in der Form, daß die Ausgangssignale des Reglers und der Steuereinrichtung mit geschwindigkeitsabhängigen Gewichtsfaktoren gewichtet und dann addiert werden, so daß man durch Ändern des Gewichtsfaktors allmählich von der Steuerung auf die Regelung überblenden kann.

Für die Steuerungsfunktionen werden von der Steuereinrichtung vorzugsweise vorgegebene Steuerprogramme abgearbeitet, deren Auswahl und/oder deren Parameter in Abhängigkeit von der durch Sensoren erfaßten Verkehrssituation veränderbar sind.

Im folgenden werden Ausführungsbeispiele der Erfindung anhand der Zeichnung näher erläutert.

Es zeigen:
Fig. 1 ein Blockdiagramm der erfindungsgemäßen Vorrichtung;
Fig. 2 ein Geschwindigkeitsdiagramm zur Erläuterung von Wechselvorgängen zwischen Steuerungs- und Regelbetrieb; und
Fig. 3 ein Zeitdiagramm zur Erläuterung von Steuerfunktionen für das Anfahren und das Bremsen in den Stand.

### Beschreibung von Ausführungsbeispielen

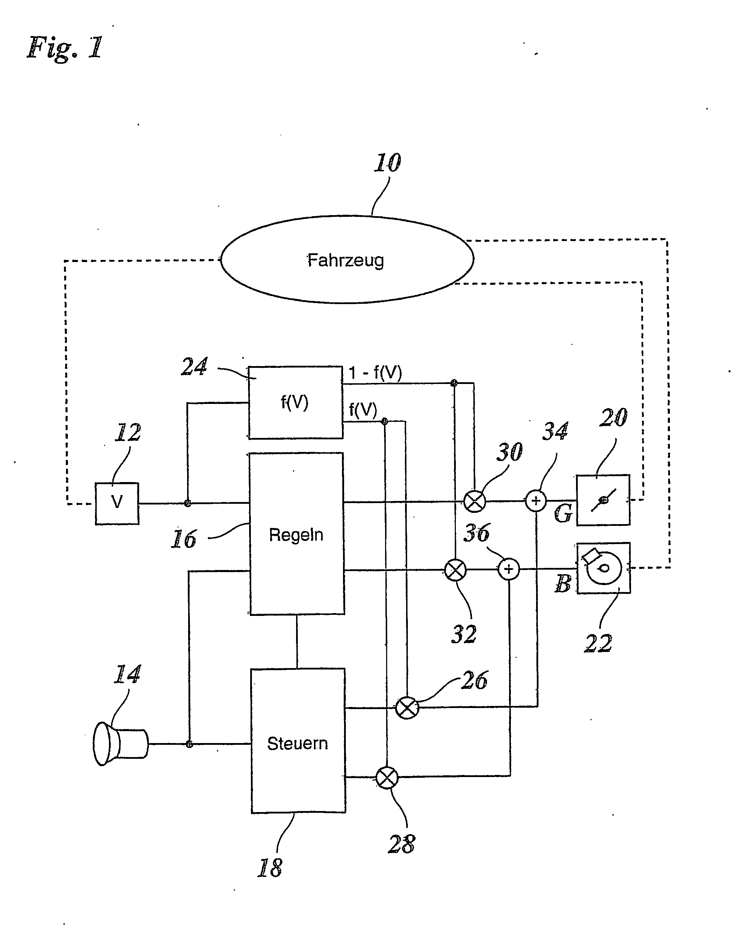

Die in Figur 1 gezeigte Vorrichtung zur Längsführung eines Kraftfahrzeugs 10 umfaßt einen Geschwindigkeitssensor 12, der in bekannter Weise, zum Beispiel mit Hilfe von handelsüblichen dynamischen Raddrehzahlsensoren, die Fahrgeschwindigkeit des Fahrzeugs.mißt, einen Abstandssensor 14, beispielsweise in der Form eines Radarsensors, der den Abstand, die Relativgeschwindigkeit und ggf. die Richtung zu einem unmittelbar vor dem eigenen Fahrzeug 10 fahrenden oder haltenden anderen Fahrzeug mißt, einen Regler 16 und eine Steuereinrichtung 18, die beide in das Antriebssystem 20 und das Bremssystem 22 des Fahrzeugs 10 eingreifen und so das Beschleunigungs- und Bremsverhalten des Fahrzeugs beeinflussen können.

Als Beispiel soll angenommen werden, daß es sich bei dem Fahrzeug 10 um ein Fahrzeug mit Automatikgetriebe handelt, obgleich die Erfindung grundsätzlich, mit auf der Hand liegenden Anpassungen, auch bei Fahrzeugen mit Schaltgetriebe anwendbar ist. Der Eingriff in das Antriebssystem 20 erfolgt durch ein elektronisches Signal, das in seiner Bedeutung der Betätigung des Gaspedals durch den Fahrer äquivalent ist. Entsprechend erfolgt der Eingriff in das Bremssystem 22 durch ein elektronisches Signal, das der Betätigung des Bremspedals äquivalent ist. Die durch diese Eingriffe verursachte Geschwindigkeitsänderung des Fahrzeugs 10 wird vom Geschwindigkeitssensor 12 erfaßt und als Rückkopplungssignal an den Regler 16 gemeldet, so daß ein geschlossener Regelkreis gebildet wird.

In einem sogenannten ACC-Modus (Adaptive Cruise Control) ist die Steuereinrichtung 18 inaktiv, und die Fahrgeschwindigkeit wird allein durch den Regler 16 geregelt. Sofern vom Abstandssensor 14 kein vorausfahrendes Fahrzeug geortet wird, erfolgt eine Regelung auf eine vom Fahrer eingestellte Wunschgeschwindigkeit. Wenn der Abstandssensor 14 ein oder mehrere vorausfahrende Fahrzeuge ortet, wird das unmittelbar auf der eigenen Fahrspur vorausfahrende Fahrzeug als Zielobjekt ausgewählt, und die Geschwindigkeit wird so geregelt, daß zu diesem Fahrzeug ein sicherer Abstand eingehalten wird, der in geeigneter Weise von der augenblicklichen Fahrgeschwindigkeit abhängig ist. Diese Regelfunktionen eines ACC-Systems sind als solche bekannt und werden deshalb hier nicht erläutert.

Die ACC-Funktion ist nur bei Fahrgeschwindigkeiten oberhalb einer bestimmten Grenzgeschwindigkeit von beispielsweise 3 km/h aktivierbar, da bei kleineren Geschwindigkeiten die augenblickliche Fahrgeschwindigkeit mit Hilfe des Geschwindigkeitssensors 12 nicht präzise genug erfaßt werden kann, so daß eine stabile Regelung in einem geschlossenen Regelkreis nicht möglich ist. Bei niedriger Geschwindigkeit wird deshalb von dem Regler 16 auf die Steuereinrichtung 18 umgeschaltet. Der Regler 16 und die Steuereinrichtung 18 können durch getrennte Mikrocomputer oder durch Softwaremodule in ein und demselben Mikrocomputer gebildet werden. Zwischen dem Regler 16 und der Steuereinrichtung 18 ist ein Datenaustausch möglich, so daß die Steuereinrichtung auf Informationen zugreifen kann, die im Regler verfügbar sind, und umgekehrt. Anders als der Regler 16 kann jedoch die Steuereinrichtung 18 unmittelbar nur auf die ortungssignale des Abstandssensors 14 und nicht auf das Signal des Geschwindigkeitssensors 12 reagieren.

Das Umschalten zwischen Steuern und Regeln wird im gezeigten Beispiel durch ein Umschaltmodul 24 bewirkt, das das Signal des Geschwindigkeitssensors 12 aufnimmt und daraus einen geschwindigkeitsabhängigen Gewichtsfaktor f(V) berechnet. Durch Multiplikationsglieder 26 und 28 werden die für das Antriebssystem 20 und das Bremssystem 22 bestimmten Ausgangssignale der Steuereinrichtung 18 mit dem Gewichtsfaktor f (V) gewichtet. Entsprechend werden durch Multiplikationsglieder 30 und 32 die für das Antriebssystem 20 und das Bremssystem 22 bestimmten Ausgangssignale des Reglers 16 mit dem Gewichtsfaktor 1-f (V) gewichtet. Die gewichteten Ausgangssignale werden an Summationspunkten 34, 36 addiert, und die Summen werden als Gas-Steuersignal G und als Brems-Steuersignal B dem Antriebssystem 20 bzw. dem Bremssystem 22 zugeführt. Wenn der Gewichtsfaktor f(V) den Wert 1 hat, findet somit eine reine Steuerung statt, während bei f(V) = 0 eine reine Regelung stattfindet.

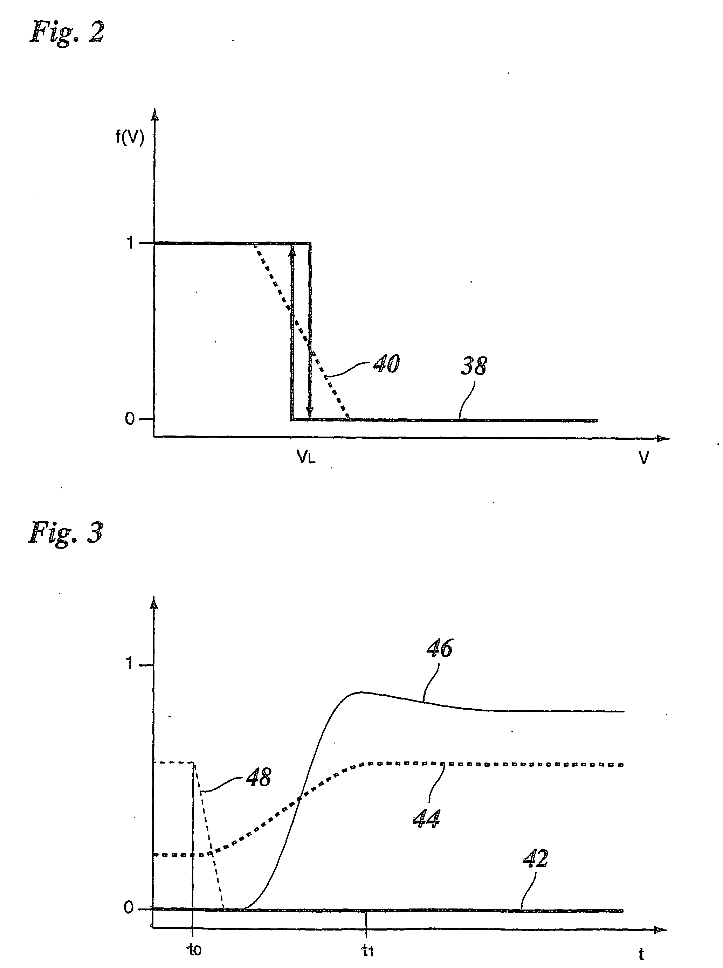

Ein möglicher Zusammenhang zwischen der Fahrgeschwindigkeit V und dem Gewichtsfaktor f (V) wird durch die in Figur 2 in durchgezogenen Linien eingezeichnete Hysteresekurve 38 illustriert. Wenn die ACC-Funktion aktiv ist und die Fahrgeschwindigkeit V, etwa beim Auffahren auf ein Stauende, unter eine bestimmte Grenzgeschwindigkeit V_{L} (z.B. 3 km/h) absinkt, so wird f(V) sprunghaft von 0 auf 1 erhöht, d.h., es wird von Regelung auf Steuerung umgeschaltet. Wenn im Rahmen der Steuerung die Fahrgeschwindigkeit wieder auf einen Wert etwas oberhalb von V_{L} zunimmt, wird wieder sprunghaft auf Regelung zurückschaltet. Als Alternative hierzu illustriert die gestrichelt eingezeichnete Kurve 40 einen fließenden Übergang zwischen Steuerung und Regelung.

Zwei typische Steuerungsfunktionen der Steuereinrichtung 18, nämlich das Bremsen in den Stand und das Anfahren aus dem Stand, sollen unter Bezugnahme auf Figur 3 erläutert werden.

Die fette durchgezogene Kurve 42 in Figur 3 gibt für den Fall, daß das Fahrzeug in den Stand gebremst wird, in beliebigen Einheiten den zeitlichen Verlauf des Gas-Steuersignals G an, das dem Antriebssystem 20 zugeführt wird. Die fett und gestrichelt eingezeichnete Kurve 44 gibt den entsprechenden Verlauf des Brems-Steuersignals B an. Bis zur Zeit t₀ ist noch der Regler 16 aktiv. Im Rahmen der abstandsabhängigen Regelung wird das Fahrzeug verzögert. Das Gas-Steuersignal G hat den Wert 0, und das Brems-Steuersignal B hat einen bestimmten Wert, der durch die Funktion des Reglers 16 bestimmt wird. Zur Zeit t₀ sinkt die Fahrgeschwindigkeit unter V_{L}, und es wird gemäß der Hysteresekurve 38 (Figur 2) auf Steuern umgeschaltet. Damit ein abrupter Übergang vermieden wird, sind die Anfangswerte des Gas-Steuersignals G und des Brems-Steuersignals B, die von der Steuereinrichtung 18 ausgegeben werden, an die entsprechenden Werte des Reglers 16 angepaßt. Die Steuereinrichtung 18 bewirkt dann innerhalb des Zeitintervalls zwischen t₀ und t₁ eine lineare Erhöhung des Brems-Steuersignals auf einen Wert, der hoch genug ist, das Fahrzeug zwischen den Zeitpunkten t₀ und t₁ kontrolliert in den Stand zu bremsen. Das Gas-Steuersignal G behält unterdessen dern Wert 0. Ab dem Zeitpunkt t₁ wird die Brems-Steuersignal auf dem erreichten Wert gehalten, damit das Fahrzeug nicht wieder anrollt.

Die Steuereinrichtung 18 ist so ausgebildet, daß sie den Zeitpunkt t₁ und entsprechend auch die Zunahmerate des Brems-Steuersignals zwischen t₀ und t₁ in Abhängigkeit von den vom Abstandssensor 14 übermittelten Abstands- und Relativgeschwindigkeitsdaten variieren kann. Auf diese Weise wird der Anhaltevorgang so gesteuert, daß er einerseits nicht zu abrupt erfolgt und andererseits das Fahrzeug 10 nicht zu dicht auf das Zielobjekt auffährt.

Die in dünneren Linien eingezeichneten Kurven 46 und 48 illustrieren das Anfahren aus dem Stand. Die Kurve 46 gibt das Gas-Steuersignal G und die Kurve 48 das Brems-Steuersignal B an. Bis zum Zeitpunkt t₀ wird die Bremse gehalten, und das Gas-Steuersignal ist 0. Zur Zeit t₀ erkennt der Abstandssensor 14, daß das vorausfahrende Fahrzeug angefahren ist, und in der Steuereinrichtung 18 wird die automatische Anfahrfunktion ausgelöst. Das Brems-Steuersignal 48 fällt innerhalb kurzer Zeit auf 0 ab, und sobald die Bremse gelöst ist, wird das Gas-Steuersignal (Kurve 46) allmählich auf einen relativ hohen Wert erhöht, so daß das Fahrzeug beschleunigt wird. Nach Erreichen eines Scheitelwertes wird das Gas-Steuersignal wieder etwas zurückgenommen, damit das Fahrzeug mit mäßiger Beschleunigung weiter beschleunigt wird. Der genaue zeitliche Verlauf der Kurve 46 kann in der Steuereinrichtung 18 beispielsweise durch Tabellennachschlag oder durch eine mathematische Funktion bestimmt werden. Bei fortgesetzter Beschleunigung erreicht das Fahrzeug irgendwann die Grenzgeschwindigkeit V_{L} und die Hysterese-Sprunggeschwindigkeit, bei der wieder auf Regeln umgeschaltet wird.

Während der Beschleunigungsphase wird das Signal des Abstandssensors 14 auch von der Steuereinrichtung 18 überwacht, und erforderlichenfalls wird das Gas-Steuersignal 46 zurückgenommen oder es wird wieder die Steuerungsfunktion "Bremsen in den Stand" eingeleitet.

Bei dem hier gezeigten Beispiel sind die Stop-Funktion (Bremsen in den Stand) und die Anfahrfunktion, zu deren Ausführung die Steuereinrichtung 18 benötigt wird, so mit den üblichen ACC-Funktionen kombiniert, daß der Wechsel zwischen Stop & Go und dem ACC-Modus ohne Eingriff des Fahrers stattfindet. Es kann jedoch zweckmäßig sein, Funktionen wie das Bremsen in den Stand und das Anfahren aus dem Stand nur im Rahmen einer speziellen Stop & Go-Funktion zuzulassen, die vom Fahrer durch einen besonderen Befehl aktiviert werden muß. Auch der Wechsel vom Stop & Go Modus in den ACC-Modus ist dann nur durch aktiven Eingriff des Fahrers (beispielsweise durch Eingabe eines Tastenbefehls) möglich. In diesem Fall ist vorzugsweise der ACC-Modus als reiner Regelmodus ausgestaltet und nur oberhalb von 20 km/h aktivierbar, während im Stop & Go-Modus ein Wechseln zwischen Regeln und Steuern stattfinden kann, aber im Regelbetrieb die Wunschgeschwindigkeit auf beispielsweise maximal 40 km/h begrenzt ist.

## Patentansprüche

1. Vorrichtung zur Längsführung eines Kraftfahrzeugs (10), mit einem Geschwindigkeitssensor (12) zur Messung der Fahrgeschwindigkeit (V) des Fahrzeugs, einem Abstandssensor (14) zur Messung des Abstands zu einem etwa vor dem Fahrzeug (10) befindlichen Hindernis und einem Regler (16), der in das Antriebs- und Bremssystem (20, 22) des Fahrzeugs eingreift und die Fahrgeschwindigkeit - ggf. in Abhängigkeit vom Abstand zum Hindernis - in einem geschlossenen Regelkreis regelt, sofern die Fahrgeschwindigkeit (V) oberhalb einer bestimmten Grenzgeschwindigkeit (V_{L}) liegt, **gekennzeichnet durch** eine Steuereinrichtung (18), die bei Fahrgeschwindigkeiten unterhalb der Grenzgeschwindigkeit (V_{L}) derart in das Antriebs-und Bremssystem (20, 22) eingreift, daß die Fahrgeschwindigkeit gesteuert wird.

2. Vorrichtung nach Anspruch 1, **dadurch gekennzeichnet, daß** in der Steuereinrichtung (18) eine Stop-Funktion zum automatischen Bremsen des Fahrzeugs in den Stand implementiert ist.

3. Vorrichtung nach Anspruch 1 oder 2, **dadurch gekennzeichnet, daß** in der Steuereinrichtung (18) eine Anfahrfunktion zur automatischen Steuerung des Anfahrens des Fahrzeugs aus dem Stand implementiert ist.

4. Vorrichtung nach Anspruch 2 oder 3, **dadurch gekennzeichnet, daß** die Stop-Funktion und/oder die Anfahrfunktion in Abhängigkeit von Signalen des Abstandssensors (14) aktivierbar und deaktivierbar ist.

5. Vorrichtung nach einem der vorstehenden Ansprüche, **gekennzeichnet durch** ein Umschaltmodul (24) zum automatischen Umschalten zwischen Steuern und Regeln in Abhängigkeit von der Fahrgeschwindigkeit (V).

6. Vorrichtung nach Anspruch 5, **dadurch gekennzeichnet, daß** die Umschaltung zwischen Steuern und Regeln mit einer Hysteresefunktion (38) erfolgt.

7. Vorrichtung nach Anspruch 5, **dadurch gekennzeichnet, daß** der Übergang zwischen Regeln und Steuern fließend, durch Überblenden der Ausgangssignale der Steuereinrichtung (18) und des Reglers (16) erfolgt.

## Claims

1. Device for longitudinally guiding a motor vehicle (10), having a speed sensor (12) for measuring the speed (V) of the vehicle, a distance sensor (14) for measuring the distance from an obstacle located approximately in front of the vehicle (10), and a controller (16) which intervenes in the drive system (20) and brake system (22) of the vehicle and performs closed-loop control of the speed, if appropriate as a function of the distance from the obstacle, in a closed control loop if the speed (V) is above a specific limiting speed (V_{L}), **characterized by** a control device (18) which at speeds below the limiting speed (V_{L}) intervenes in the drive system (20) and brake system (22) in such a way that the speed is controlled.

2. Device according to Claim 1, **characterized in that** a stop function for automatically braking the vehicle to a standstill is implemented in the control device (18).

3. Device according to Claim 1 or 2, **characterized in that** a driving off function for automatically controlling the driving off of the vehicle from a standstill is implemented in the control device (18).

4. Device according to Claim 2 or 3 **characterized in that** the stop function and/or the driving off function can be activated and deactivated as a function of the signals of the distance sensor (14).

5. Device according to one of the preceding claims, **characterized by** a switch-over module (24) for automatically switching over between open-loop control and closed-loop control as a function of the speed (V).

6. Device according to Claim 5, **characterized in that** the switchover between open-loop control and closed-loop control is carried out with a hysteresis function (38).

7. Device according to Claim 5, **characterized in that** the transition between closed-loop control and open-loop control takes place in a fluid fashion, by superimposing the output signals of the control device (18) and of the controller (16).

## Revendications

1. Dispositif de guidage longitudinal d'un véhicule automobile (10), comprenant un capteur de vitesse (12) pour mesurer la vitesse de déplacement (V) du véhicule, un capteur de distance (14) pour mesurer la distance par rapport à un obstacle se trouvant éventuellement devant le véhicule (10) et un régulateur (16) qui intervient dans le système d'entraînement et de freinage (20, 22) du véhicule et régule la vitesse de déplacement - le cas échéant en fonction de la distance par rapport à l'obstacle - dans un circuit de régulation fermé, dans la mesure où la vitesse de déplacement (V) est supérieure à une vitesse limite (V_{L}) déterminée,
**caractérisé par**
un dispositif de commande (18) qui, lorsque les vitesses de déplacement sont inférieures à la vitesse limite (V_{L}), intervient dans le système d'entraînement et de freinage (20, 22) pour commander la vitesse de déplacement.

2. Dispositif selon la revendication 1,
**caractérisé en ce que**
dans le dispositif de commande (18) une fonction d'arrêt est implémentée pour le freinage automatique du véhicule jusqu'à l'arrêt.

3. Dispositif selon la revendication 1 ou 2,
**caractérisé en ce que**
dans le dispositif de commande (18) une fonction de mise en marche est implémentée pour la commande automatique de la mise en marche du véhicule depuis l'arrêt.

4. Dispositif selon la revendication 2 ou 3,
**caractérisé en ce que**
la fonction d'arrêt, et/ou la fonction de mise en marche, peut être activée ou désactivée en fonction de signaux du capteur de distance (14).

5. Dispositif selon l'une quelconque des revendications précédentes,
**caractérisé par**
un module de commutation (24) pour la commutation automatique entre commande et régulation en fonction de la vitesse de déplacement (V).

6. Dispositif selon la revendication 5,
**caractérisé en ce que**
la commutation entre commande et régulation s'effectue à l'aide d'une fonction d'hystérèse (38).

7. Dispositif selon la revendication 5,
**caractérisé en ce que**
la transition entre régulation et commande s'effectue de façon fluide par commutation des signaux de sortie du dispositif de commande (18) et du régulateur (16).
